# FASCICULE DE BREVET EUROPEEN

(11) **EP 0 725 468 B1**
(45) Date de publication et mention de la délivrance du brevet: **16.09.1998**
(21) Numéro de dépôt: 96400187.9
(22) Date de dépôt: 25.01.1996
(51) Int. Cl.: H02G 9/10, G02B 6/44

(54) **Boîtier d'épissure pour fibres optiques**
Faseroptisches Verbindungsgehäuse
Connection box for optical fibres

(30) Priorité: 02.02.1995 FR 9501229
(43) Date de publication de la demande: 07.08.1996
(73) Titulaire: FRANCE TELECOM, 75015 Paris (FR)
(72) Inventeur: Caudrelier, Jacques, F-45190 Villorceau (FR)
(74) Mandataire: Armengaud Ainé, Alain

(56) Documents cités:
- DE-C- 4 140 701
- GB-A- 2 260 452
- GB-A- 2 277 812
- US-A- 4 709 980
- US-A- 4 722 585

## Description

La présente invention est relative à un boîtier d'épissure de raccordement de fibres optiques disposées bout à bout ou selon un piquage latéral d'une des fibres sur l'autre, ce boîtier, notamment enterrable, comportant des moyens permettant de disposer à la demande de la surlongueur de fibre nécessaire à la réalisation de l'épissure dans des conditions satisfaisantes, puis de reprendre aisément cette surlongueur une fois l'épissure achevée, la fibre étant alors lovée dans le boîtier sans aucune contrainte de torsion ou de flexion préjudiciable.

Dans le cadre de l'état de la technique, un exemple de boîtier d'épissure pour fibres optiques est présenté dans le document US-A-4709980.

On sait que la réalisation d'une épissure en bout ou en partie courante d'une fibre optique appartenant à un câble contenant à l'intérieur d'une gaine de protection externe une pluralité de telles fibres, parallèles ou toronnées ensemble, exige que la fibre choisie soit extraite de la gaine de protection sur une longueur suffisante, ceci pour diverses raisons.

En premier lieu, la fibre optique considérée étant par nature fragile, il est toujours possible que, lors de la réalisation de l'épissure de raccordement avec une autre fibre, l'une ou l'autre de ces fibres se casse, nécessitant de disposer d'une longueur adéquate encore disponible pour recommencer l'opération.

Par ailleurs, les étapes indispensables pour assurer ce raccordement des fibres nécessitent que les longueurs de celles-ci utilisées soient suffisantes, en particulier pour être amenées jusqu'à un véhicule convenablement équipé, situé à proximité de l'endroit où doit être effectué le raccordement, dans une chambre qui est généralement enterrée mais qui se situe la plupart du temps à une certaine distance de celui-ci. A titre indicatif, la pratique conduit, en règle générale, à réserver une dizaine de mètres de longueur libre, ou surlongueur, à chaque extrémité du câble.

Une fois l'épissure achevée, le problème se pose alors de réserver cette surlongueur, en effectuant des tours de fibre réguliers, en huit ou en rond, avec un diamètre de courbure suffisamment grand pour éviter toute rupture en flexion de la fibre. Cette opération est d'autant plus délicate à réaliser que le câble est relativement rigide, surtout s'il doit être enterré.

Les tours ou couronnes de fibre, en rond ou en huit, ainsi obtenus, sont ensuite fixés sur la paroi d'une chambre intérieure, prévue sous un boîtier où est réalisée l'épissure proprement dite, les brins des fibres ainsi logées n'étant toutefois pas à l'abri d'éventuels chocs ou pliages.

La présente invention est relative à un boîtier d'épissure pour fibres optiques, qui apporte une solution simple et efficace à ces problèmes, en permettant de disposer facilement d'une surlongueur de fibre appréciable pour la réalisation de cette épissure de raccordement, puis de résorber cette surlongueur non utilisée, en assurant une protection efficace de la fibre et du câble dont elle est issue.

A cet effet, le boîtier considéré, constitué d'un coffret étanche et d'un support pour ledit coffret propre à contenir une barrette d'épissure reliant entre elles les extrémités de deux fibres optiques issues de deux câbles distincts, se caractérise en ce que le coffret est constitué d'un ensemble étanche présentant un axe de symétrie, les deux câbles étant raccordés à ce coffret, le support cylindrique comprenant un fût central et une paroi périphérique coaxiale délimitant entre eux un logement dans lequel s'enroulent ou se déroulent les deux câbles pour délivrer ou résorber une longueur suffisante pour permettre la réalisation de l'épissure, à monter à l'intérieur du coffret, qui présente deux portions de côté rectilignes séparées, sensiblement dans le prolongement l'une de l'autre, sur lesquelles sont prévus des passages tubulaires pour la fixation des extrémités des deux câbles respectivement, les extrémités de ces portions de côté rectilignes étant réunies par des fonds de forme générale circulaire donnant au coffret une section droite en coquille d'escargot.

Avantageusement, le fût central du support comporte à son extrémité supérieure une collerette circulaire aménagée pour recevoir le coffret étanche.

Par ailleurs et selon une autre caractéristique de l'invention, le logement du support recevant les câbles comporte des colliers de blocage de chacun de ceux-ci, avant leur pénétration dans le coffret étanche à travers les passages tubulaires en conférant à ces câbles une courbure appropriée.

Selon une autre caractéristique, le coffret étanche est réalisé en deux parties accolées mutuellement selon un plan médian commun, à la façon d'un fond et d'un couvercle, les passages tubulaires des câbles étant sensiblement ménagés au droit de ce plan médian.

Selon encore une autre caractéristique, chaque passage tubulaire comporte avantageusement des manchons thermorétractables d'étanchéité, le coffret étant muni de moyens d'amarrage des composants du câble dans le prolongement de ces passages tubulaires.

Conformément à une autre caractéristique de l'invention, le support comporte un capot de protection extérieur, en matière plastique ou métallique, présentant au moins deux ouvertures latérales, de préférence opposées, pour le passage des câbles introduits dans le logement.

Selon une autre caractéristique également, la paroi périphérique du logement comporte un bord d'extrémité, incliné vers l'intérieur, afin de faciliter l'introduction des câbles dans celui-ci.

D'autres caractéristiques d'un boîtier d'épissure pour fibres optiques, établi conformément à l'invention, apparaîtront encore à travers la description qui suit d'un exemple de réalisation, donné à titre indicatif et non limitatif, en référence aux dessins annexés, sur lesquels :
- Les Figures 1a et 1b illustrent les moyens pour la réalisation d'une épissure selon l'art antérieur, montrant la difficulté présentée pour permettre de disposer de la sur longueur de câble et par suite de fibre nécessaire à la réalisation d'une telle épissure.
- Les Figures 2a et 2b représentent schématiquement un boîtier d'épissure conforme à l'invention, respectivement dans la position où la fibre est lovée dans ce boîtier et dans celle où elle est extraite de celui-ci pour permettre la liaison des extrémités des fibres à relier avant leur logement dans un coffret de liaison, lui-même apte à être monté à l'intérieur du boîtier avant que celui-ci ne permette de résorber la surlongueur indispensable.
- La Figure 3 est une vue en perspective, à plus grande échelle, du boîtier d'épissure et du coffret devant être logé dans celui-ci, tels que représentés schématiquement sur la Figure 2b.
- La Figure 4 est une vue en coupe et de dessus, à encore plus grande échelle, du boîtier et du coffret, celui-ci étant représenté extrait du boîtier.
- La Figure 5 est une vue en coupe transversale du boîtier illustré sur la Figure 4, avec le coffret monté dans celui-ci.
- La Figure 6 est une vue en coupe du coffret de liaison, représenté séparé du boîtier.

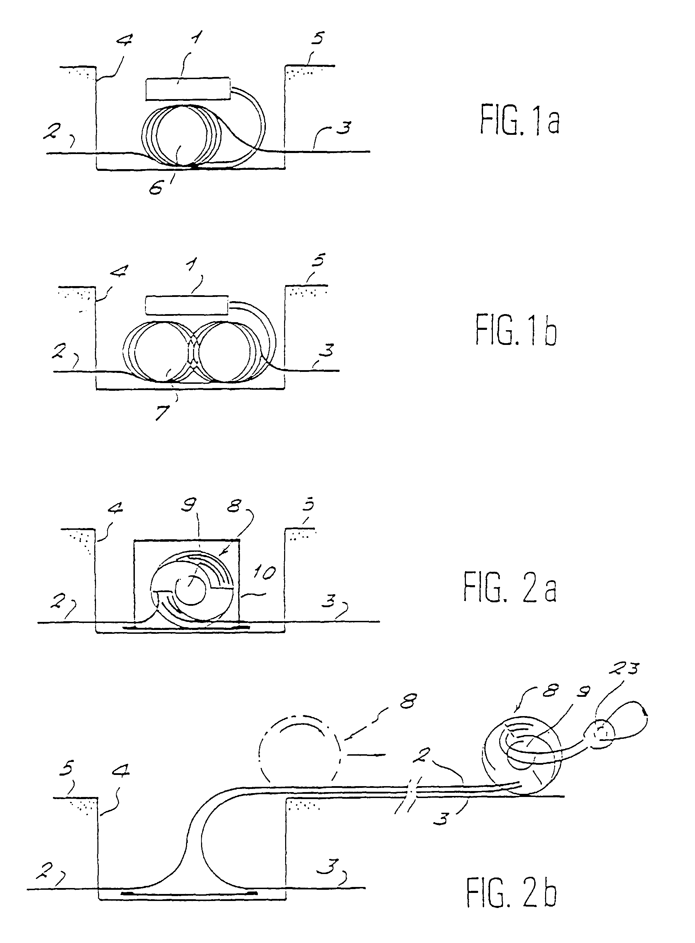

Sur la Figure 1a, est représenté très schématiquement un boîtier d'épissure classique 1, entre deux fibres issues de deux câbles, respectivement 2 et 3, ce boîtier étant disposé dans une chambre ouverte 4, ménagée dans le sol 5 dans lequel les câbles 2 et 3 sont enterrés. La réalisation des liaisons nécessaires aux extrémités des fibres à relier par le boîtier 1 exige pour chacun des deux câbles une surlongueur de fibre notable, laquelle, une fois l'épissure effectuée, doit être placée à l'intérieur de la chambre 4 en étant lovée sur elle-même pour former des spires circulaires 6, ou encore ayant une configuration 7 en forme de huit, comme illustré sur la Figure 1b qui reprend le même montage que la Figure 1a.

Dans l'un et l'autre cas, cette manière de lover la surlongueur de fibre optique nécessaire à la réalisation dans des conditions satisfaisantes de l'épissure à disposer dans le boîtier 1, occupe une place notable et surtout impose que les tours circulaires ou en huit de fibre soient fixés ou suspendus contre les parois de la chambre 4, sous le boîtier 1, ce qui ne les protège pas vis-à-vis d'éventuels chocs ou pliures, pouvant avoir des conséquences particulièrement préjudiciables.

La Figurer 2a illustre un boîtier d'épissure conforme à l'invention, désigné dans son ensemble sous la référence 8, celui-ci permettant de grouper dans un seul ensemble la zone où les extrémités des fibres sont reliées l'une à l'autre à l'intérieur d'un coffret de liaison 9 porté par ce boîtier et également celle où les surlongueurs des câbles 2 et 3 dont sont issues les fibres ainsi raccordées, peuvent être aisément lovées en autorisant la fourniture d'une longueur appropriée de ces câbles pour la réalisation de cette épissure, aussi bien que remises en place à l'intérieur du boîtier, une fois cette épissure effectuée, en assurant alors une protection efficace des câbles. Dans la chambre 4, le boîtier 8 peut être avantageusement coiffé par un capot de protection 10, dont le détail sera explicité plus loin.

La Figure 2b illustre schématiquement la manière dont le boîtier 8 permet par simple déroulement des câbles à l'extérieur de la chambre 4 de fournir les surlongueurs nécessaires pour la réalisation de l'épissure proprement dite, laquelle, une fois disposée dans le coffret de liaison 9 et celui-ci monté dans le boîtier 8, se trouve entièrement protégée, l'enroulement en sens inverse du boîtier pour le ramener dans la chambre 4 permettant de reprendre les surlongueurs préalablement fournies, en disposant les tours correspondants à l'intérieur du logement du boîtier.

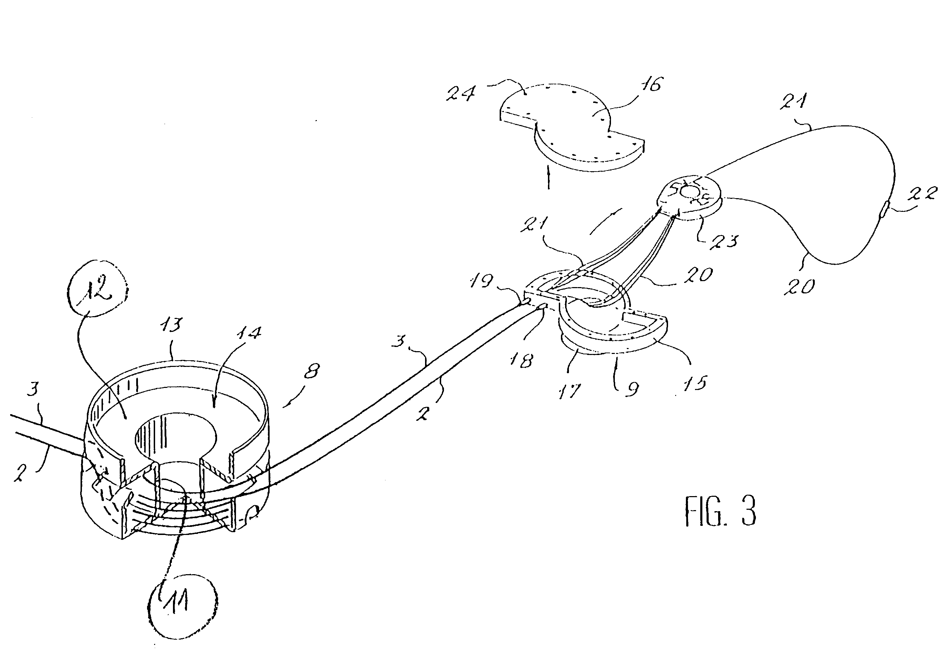

La Figure 3 illustre, à plus grande échelle, la structure du boîtier 8 et du coffret de liaison 9 pour les câbles 2 et 3 à partir desquels est réalisée l'épissure à monter dans ce coffret.

Comme on le voit sur ces Figures, le boîtier 8, ayant la forme générale d'un support cylindrique, est notamment constitué d'un fût central 11, prolongé à son extrémité supérieure par un plateau 12, se terminant lui-même à sa périphérie extérieure par un rebord 13, perpendiculaire au plan du plateau.

Le plateau 12 et le rebord 13 forment ainsi une cavité ouverte 14 dans laquelle peut être logé le coffret 9, lequel est essentiellemement formé d'un fond creux 15 et d'un couvercle supérieur 16, s'assemblant mutuellement de façon étanche selon un plan médian du coffret. Sous le fond 15, dans sa partie centrale, est prévu un bossage circulaire 17 dont le diamètre externe correspond sensiblement au diamètre interne du fût 11, de telle sorte que le coffret puisse être convenablement maintenu dans la cavité 14, sans empêcher son éventuel débattement par rapport à l'axe du fût.

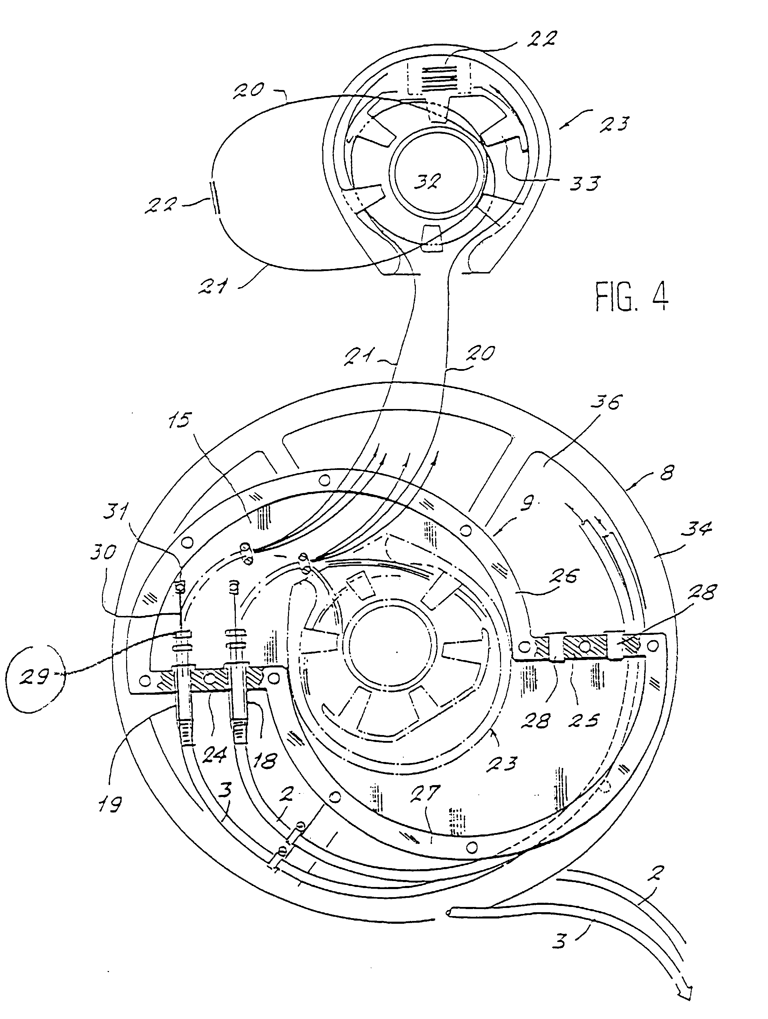

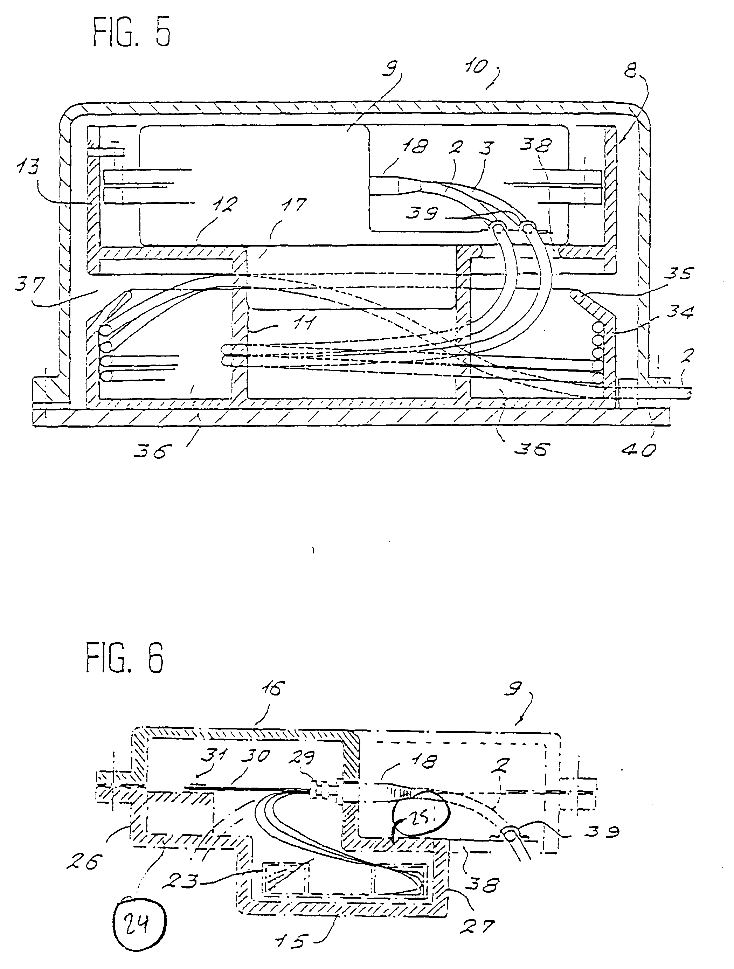

Les câbles 2 et 3 sont raccordés au coffret 9 sensiblement dans le plan médian de celui-ci, par des passages tubulaires tels que 18 et 19, dont le détail de la réalisation apparaîtra plus clairement sur les Figures 4 et 6, ces passages étant aménagés pour permettre à la fois l'immobilisation des extrémités des câbles vis-à-vis du coffret 9 et l'étanchéité de leur zone de pénétration dans ce coffret, notamment au moyen de manchons thermorétractables (non représentés), tout en autorisant au-delà de ces passages à l'intérieur du coffret un épanouissement des diverses fibres optiques, telles que 20 et 21, issues des deux câbles respectivement.

L'ensemble de ces fibres 20 et 21 appartenant à l'un et à l'autre des câbles 2 et 3, voire certaines d'entre elles seulement, sont prévues pour être raccordées mutuellement deux par deux, à chaque fois par une barrette de liaison appropriée 22, dont le détail importe peu à l'invention et qui n'est donc pas décrite ici.

Avantageusement, les fibres 20 et 21 et leurs barrettes de liaison 22 sont elles-mêmes logées dans un bobineau 23, propre à être monté et bloqué à l'intérieur du coffret étanche 9, entre son fond 15 et son couvercle 16, lesquels sont réunis selon leurs périphéries respectives par des vis de liaison 24.

Conformément à l'invention et comme représenté plus en détail sur la Figure 4, on constitue le coffret 9 pour lui donner une forme de coquille d'escargot, présentant un centre de symétrie et comportant à cet effet deux portions de côté rectilignes 24 et 25, sensiblement dans le prolongement l'une de l'autre, ces portions rectilignes étant réunies par deux fonds de forme générale circulaire 26 et 27, symétriques et opposés, le fond 26 étant relié aux extrémités situées à gauche sur le dessin des portions rectilignes 24 et 25, tandis que le fond 27 est réuni aux extrémités de ces mêmes portions situées à droite.

Les passages étanches 18 et 19 auxquels aboutissent les câbles 2 et 3, sont prévus, dans l'exemple considéré, dans la portion rectiligne 24, les passages homologues de la portion 25 étant dans ce cas obturés par des bouchons 28. Un montage symétrique pourrait bien entendu être envisagé, avec les passages 18 et 19 dans la portion 25 et les bouchons 28 dans la portion 24.

Au-delà de ces passages, les gaines des câbles sont sectionnées afin de permettre l'épanouissement des fibres 20 et 21 contenues dans ces câbles, ces gaines étant immobilisées par des colliers de blocage 29. Sur la Figure 4, on a également schématiquement représenté, à la sortie des câbles 2 et 3, des renforts axiaux 30, généralement métalliques, équipant ces câbles, ces renforts étant bloqués contre le fond 15 du coffret 9 par des moyens d'amarrage tels que 31 (voir également la Figure 6).

Toujours sur la Figure 4, on voit plus en détail comment peut être constitué le bobineau 23 dans lequel sont immobilisées les barrettes de liaison 22 réunissant les extrémités des fibres 20 et 21 respectivement, lesquelles sont enroulées autour d'un noyau central 32 prévu dans ce bobineau, en étant logées avantageusement sous des languettes de maintien périphériques 33.

Le bobineau 23, une fois logé à l'intérieur du coffret étanche 9, est maintenu en place contre ou sous les bords des portions droites 24 et 25 (voir à nouveau la Figure 6), en regard des fonds 26 et 27, en laissant libre par rapport à ceux-ci un espace suffisant pour le foisonnement des fibres entre les passages 18 et 19 et le bobineau.

La Figure 5 illustre, vu en coupe transversale partielle, le boîtier 8 dans lequel est monté le coffret étanche 9 par son bossage 17, ce coffret contenant lui-même le bobineau 23 (non représenté sur cette Figure).

La vue en coupe correspondante permet de mieux voir la structure du boîtier 8, comportant, autour du fût central 11, une paroi périphérique coaxiale 34, présentant à son extrémité supérieure un bord 35 incliné vers l'intérieur du logement 36 délimité entre le fût et la paroi et ménageant, sous le plateau 12, une ouverture circulaire 37 pour permettre l'introduction ou l'extraction des câbles 2 et 3 selon que le boîtier est roulé et déroulé sur le sol, comme illustré sur la Figure 2b vue précédemment.

Le plateau 12 comporte par ailleurs une ouverture 38 pour le passage des extrémités des câbles, lesquels sont maintenus vis-à-vis du coffret 9 par des colliers de blocage et de guidage 39.

L'ensemble est ensuite recouvert par le capot de protection 10, lequel est bien entendu amovible pour permettre d'accéder au coffret 9 et, après ouverture de celui-ci au bobineau 23, ce capot de protection étant réalisé en un matériau métallique ou plastique approprié. Au voisinage de son extrémité inférieure, le capot comporte au moins deux ouvertures 40 de passage pour les câbles 2 et 3, dont une seule apparaît sur le dessin.

On réalise ainsi un boîtier d'épissure pour fibres optiques de conception simple, qui permet, à la fois de réaliser l'épissure proprement dite entre les fibres à réunir, avant que leurs barrettes de liaison ne soient fixées sur un bobineau qui est lui-même logé et immobilisé dans un coffret étanche, et également de disposer à la demande de toute surlongueur de câble éventuellement nécessaire pour modifier ou reprendre l'une quelconque des épissures ainsi réalisée. La structure du boîtier permet ensuite une reprise sûre et aisée de cette surlongueur, sans introduire aucune contrainte sur les fibres elles-mêmes comme sur les câbles qui s'enroulent naturellement, sans pliures ou torsions, à l'intérieur du boîtier dans le logement qu'il comporte sous la cavité de réception du coffret étanche.

Le boîtier présente un relativement faible encombrement et permet un logement optimal des câbles, le capot de protection assurant une protection efficace du boîtier contre les pressions du sol lorsque ce boîtier est enterré, pour des câbles de communication usuels.

Bien entendu, il va de soi que l'invention ne se limite pas à l'exemple de réalisation plus spécialement décrit en référence aux dessins annexés ; elle en embrasse au contraire toutes les variations dans le cadre des revendications.

## Revendications

1. Boîtier d'épissure pour fibres optiques, constitué d'un coffret étanche et d'un support (8) pour ledit coffret (9) propre à contenir une barrette d'épissure (22) reliant entre elles les extrémités de deux fibres optiques (20, 21) issues de deux câbles distincts (2, 3), caractérisé en ce que le coffret est constitué d'un ensemble étanche présentant un axe de symétrie, les deux câbles étant raccordés à ce coffret, le support cylindrique comprenant un fût central (11) et une paroi périphérique (34) coaxiale, délimitant entre eux un logement (36) dans lequel s'enroulent ou se déroulent les deux câbles pour délivrer ou résorber une longueur suffisante pour permettre la réalisation de l'épissure, à monter à l'intérieur du coffret (9) qui présente deux portions de côté rectilignes séparées (24, 25), sensiblement dans le prolongement l'une de l'autre, sur lesquelles sont prévus des passages tubulaires (18, 19) pour la fixation des extrémités des deux câbles (2, 3) respectivement, les extrémités de ces portions de côté rectilignes étant réunies par des fonds (26, 27) de forme générale circulaire donnant au coffret une section droite en coquille d'escargot.

2. Boîtier d'épissure selon la revendication 1, caractérisé en ce que le fût central (11) du support (8) comporte à son extrémité supérieure une collerette circulaire (13) aménagée pour recevoir le coffret étanche (9).

3. Boîtier d'épissure selon l'une des revendications 1 ou 2, caractérisé en ce que le logement (36) du support (8) recevant les câbles (2, 3) comporte des colliers de blocage (39) de chacun de ceux-ci, avant leur pénétration dans le coffret étanche (9) à travers les passages tubulaires (18, 19) en conférant à ces câbles une courbure appropriée.

4. Boîtier d'épissure selon l'une quelconque des revendications 1 à 3, caractérisé en ce que le coffret étanche (9) est réalisé en deux parties (15, 16) accolées mutuellement selon un plan médian commun, à la façon d'un fond et d'un couvercle, les passages tubulaires (18, 19) des câbles (2, 3) étant sensiblement ménagés au droit de ce plan médian.

5. Boîtier d'épissure selon l'une quelconque des revendications 1 à 4, caractérisé en ce que chaque passage tubulaire (18, 19) comporte des manchons thermorétractables d'étanchéité, le coffret étant muni de moyens d'amarrage (29, 31) des composants du câble dans le prolongement de ces passages tubulaires.

6. Boîtier d'épissure selon l'une quelconque des revendications 1 à 5, caractérisé en ce que le support (8) comporte un capot de protection extérieur (10), en matière plastique ou métallique, présentant au moins deux ouvertures latérales (40), de préférence opposées, pour le passage des câbles introduits dans le logement (36).

7. Boîtier d'épissure selon l'une quelconque des revendications 1 à 6, caractérisé en ce que la paroi périphérique du logement (36) comporte un bord d'extrémité (35), incliné vers l'intérieur, afin de faciliter l'introduction des câbles dans celui-ci.

## Patentansprüche

1. Verbindungsgehäuse für optische Fasern, das aus einem dichten Kasten und einem Halter (8) für den Kasten (9) besteht, wobei der Kasten zur Aufnahme eines Spleißsteges (22) dient, der die Enden von zwei optischen Fasern (20, 21), die von zwei getrennten Kabeln (2, 3) stammen, miteinander verbindet, **dadurch gekennzeichnet, daß** der Kasten aus einer dichten Anordnung besteht, die eine Symmetrieachse aufweist, wobei die zwei Kabel an diesen Kasten angeschlossen sind, daß der zylindrische Halter einen Mittelschaft (11) und eine koaxiale Umfangswand (34) aufweist, die miteinander einen Aufnahmeraum (36) begrenzen, in den sich die zwei Kabel einrollen oder aus dem sie sich ausrollen, um eine genügende Länge aufzunehmen oder abzugeben, um die Herstellung der Spleißung zu ermöglichen, die im Inneren des Kastens (9) zu montieren ist, der zwei getrennte Abschnitte (24, 25) mit geraden Seiten aufweist, von denen der eine im wesentlichen in der Verlängerung des anderen liegt, wobei in den Abschnitten rohrförmige Durchlässe (18, 19) zur Befestigung jeweils der Enden der zwei Kabel (2, 3) vorgesehen sind, und die Enden dieser Abschnitte mit geraden Seiten durch im ganzen kreisförmige Böden (26, 27) verbunden sind, welche dem Kasten einen Querschnitt eines Schneckenhauses geben.

2. Verbindungsgehäuse nach Anspruch 1, **dadurch gekennzeichnet, daß** der Mittelschaft (11) des Halters (8) an seinem oberen Ende einen kreisförmigen Kragen (13) aufweist, der zur Aufnahme des dichten Kastens (9) ausgebildet ist.

3. Verbindungsgehäuse nach einem der Ansprüche 1 oder 2, **dadurch gekennzeichnet, daß** der Aufnahmeraum (36) des Halters (8), der die Kabel (2, 3) aufnimmt, für jedes derselben Kabelschellen (39) aufweist, welche die Kabel vor ihrem Eindringen durch die rohrförmigen Durchlässe (18, 19) in den dichten Kasten (9) befestigen, wobei sie den Kabeln eine geeignete Biegung geben.

4. Verbindungsgehäuse nach einem der Ansprüche 1 bis 3, **dadurch gekennzeichnet, daß** der dichte Kasten (9) aus zwei Teilen (15, 16) hergestellt ist, die gemäß einer gemeinsamen Mittelebene nach Art eines Bodens und eines Deckels aneinandergelegt sind, wobei die rohrförmigen Durchlässe (18, 19) für die Kabel (2, 3) im wesentlichen im Bereich dieser Mittelebene ausgebildet sind.

5. Verbindungsgehäuse nach einem der Ansprüche 1 bis 4, **dadurch gekennzeichnet, daß** jeder rohrförmige Durchlaß (18, 19) wärmeschrumpfbare Dichtungsmuffen aufweist und der Kasten mit Vorrichtungen (29, 31) zum Festmachen der Bestandteile des Kabels in der Verlängerung dieser rohrförmigen Durchlässe ausgestattet ist.

6. Verbindungsgehäuse nach einem der Ansprüche 1 bis 5, **dadurch gekennzeichnet, daß** der Halter (8) eine äußere Schutzhaube (10) aus Kunststoff oder Metall mit mindestens zwei vorzugsweise gegenüberliegenden seitlichen Öffnungen (40) für den Durchtritt der in den Aufnahmeraum (36) eingeführten Kabel aufweist.

7. Verbindungsgehäuse nach einem der Ansprüche 1 bis 6, **dadurch gekennzeichnet, daß** die Umfangswand des Aufnahmeraums (36) an ihrem Ende einen Randbereich (35) aufweist, der nach innen geneigt ist, um die Einführung der Kabel in den Aufnahmeraum zu erleichtern.

## Claims

1. Fibre-optic splice case consisting of a sealed box and a support (8) for said box (9) suitable for containing a splice connection strip (22) connecting together the ends of two optical fibres (20, 21) from two separate cables (2, 3), characterized in that the box consists of a sealed assembly having an axis of symmetry, the two cables being connected up to this box, the cylindrical support comprising a central drum (11) and a coaxial peripheral wall (34) delimiting between them a housing (36) in which the two cables are unreeled or reeled up in order to deliver or reabsorb a length sufficient to allow the splice to be made, to be mounted inside the box (9) which has two separate straight side portions (24, 25) each lying substantially in the extension of the other, in which straight side portions tubular passages (18, 19) are provided for fixing the ends of the two cables (2, 3) respectively, the ends of these straight side portions being joined by bottoms (26, 27) of circular overall shape, giving the box a cross-section in the form of a snail-shell.

2. Splice case according to Claim 1, characterized in that the central drum (11) of the support (8) includes at its upper end a circular collar (13) arranged to receive the sealed box (9).

3. Splice case according to either of Claims 1 and 2, characterized in that the housing (36) of the support (8) receiving the cables (2, 3) includes clips (39) for locking each of them in place, before they penetrate the sealed box (9) through the tubular passages (18, 19), imparting these cables with an appropriate curvature.

4. Splice case according to any one of Claims 1 to 3, characterized in that the sealed box (9) is made in two parts (15, 16) which are mutually affixed in a common mid-plane, in the manner of a bottom and a lid, the tubular passages (18, 19) for the cables (2, 3) being substantially arranged in line with this mid-plane.

5. Splice case according to any one of Claims 1 to 4; characterized in that each tubular passage (18, 19) includes heat-shrinkable sealing sleeves, the box being provided with means (29, 31) for fastening the components of the cable in the extension of these tubular passages.

6. Splice case according to any one of Claims 1 to 5, characterized in that the support (8) includes an external protective cover (10), made of plastic or metal, having at least two lateral openings (40), preferably opposite each other, for the passage of the cables inserted into the housing (36).

7. Splice case according to any one of Claims 1 to 6, characterized in that the peripheral wall of the housing (36) includes an end edge (35) which is inclined inwards so as to make it easier for the cables to be inserted into it.
